# EUROPEAN PATENT APPLICATION

(11) **EP 4 607 750 A1**
(43) Date of publication of application: **27.08.2025**
(21) Application number: 22962633.8
(22) Date of filing: 21.10.2022
(51) Int. Cl.: H02J 7/02

(54) **BATTERY CONTROL SYSTEM AND BATTERY CONTROL METHOD**

(71) Applicant: Renault s.a.s, 92100 Boulogne Billancourt (FR)
(72) Inventor: AOKI, Tetsuya, Atsugi-shi, Kanagawa 243-0123 (JP)
(86) International application number: PCT/IB2022/000600
(87) International publication number: WO 2024/084258

(57) **Abstract**

A battery control system (1) includes: pressure application means (16) that applies pressure to a battery module (2) by pressing the battery module (2) along a stacking direction of battery cells (21) having a negative electrode including a solid electrolyte and lithium; a controller (10) that adjusts the value of the pressure by controlling the pressure application means (16); and discharge means (15) that executes balancing of remaining discharge capacities among the battery cells (21) in the battery module (2); wherein the controller (10) starts a first pressurization control for increasing the pressure by the pressure application means (16) to a predetermined pressure or higher before the balancing is started.

## Description

### Technical Field

The present invention relates to a battery control system and a battery control method.

### Background Art

A lithium-ion secondary battery is known that includes: an electrode body having a positive electrode and a negative electrode containing a Si-containing negative electrode active material, and a surface pressure control unit that controls surface pressure applied to the electrode body in a predetermined direction (see, for example, Patent Document 1). The surface pressure control unit of the lithium-ion secondary battery controls a fluctuation range of the surface pressure that varies with charging and discharging to 3.8 MPa or less. More specifically, the fluctuation range is the difference between the maximum value and minimum value of the surface pressure observed when charging and discharging from 0% to 100% SOC (see, for example, Patent Document 1 (paragraph [0014])).

### Prior Art Document

### Patent Document

Patent Document 1: JP 2019-61749 A

### Summary of Invention

### Problems to Be Solved by Invention

However, in the known art, no consideration is given to pressure control for a secondary battery when performing balancing of the secondary battery. Note that balancing is executed, for example, when a vehicle control system is stopped and then after that, the vehicle control system is started, and the vehicle control system is stopped, for example, when the vehicle is parked or the like.

Even when the control system is stopped, the secondary battery self-discharges, and due to this self-discharge, the secondary battery contracts. Due to this contraction, it may not be possible to apply an appropriate pressure to the secondary battery, and the electrical resistance of the secondary battery may deviate from a range appropriate for charging and discharging. In that case, there is a problem in that the accuracy of balancing the secondary battery decreases.

A problem to be solved by the present invention is to provide a battery control system and a battery control method capable of improving the accuracy of balancing battery cells.

### Means for Solving Problems

The present invention solves the above problem by discharging battery cells to balance the remaining discharge capacities between the battery cells, and by increasing the pressure applied to a battery module to a predetermined pressure or higher by pressing the battery module along a stacking direction of the battery cells before balancing begins.

### Effects of Invention

With the present invention, the accuracy of balancing battery cells can be improved.

### Brief Description of Drawings

FIG. 1 is a block diagram illustrating a battery control system according to an embodiment of the present invention.
FIG. 2 is a flowchart showing a procedure of a battery control method according to an embodiment of the present invention.
FIG. 3 is a graph showing a relationship between pressure applied to a battery cell and a resistance value of the battery cell.
FIG. 4 is a graph showing change in pressure over time in the battery control method according to the embodiment of the present invention.
FIG. 5 is a graph showing change in pressure over time in the battery control method according to a modified example of the present invention.

### Modes for Carrying Out the Invention

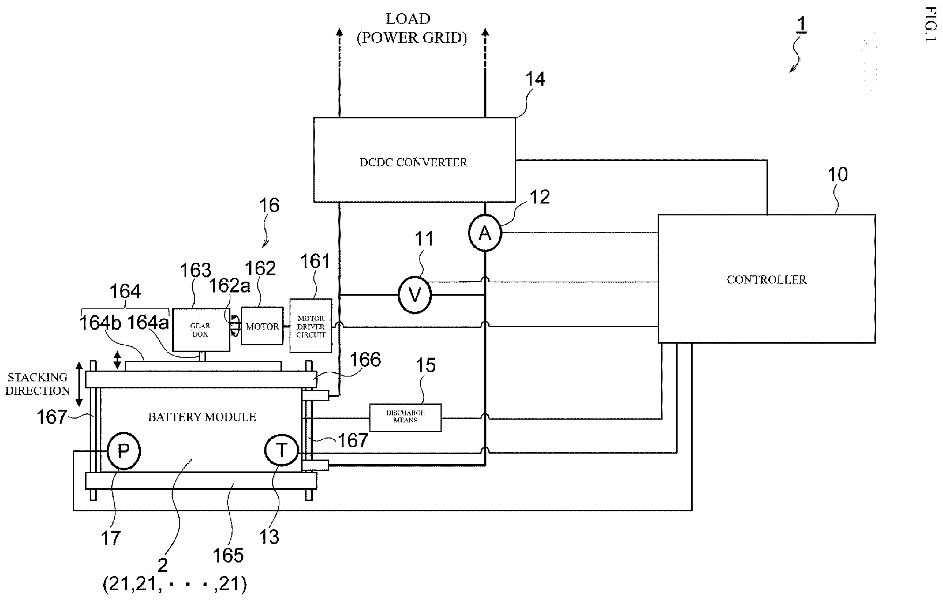

Hereinafter, embodiments of the present invention will be described with reference to the drawings. FIG. 1 is a block diagram illustrating a battery control system 1 according to the present embodiment.

As illustrated in FIG. 1, the battery control system 1 includes a controller 10, a voltage sensor 11, a current sensor 12, a temperature sensor 13, a DCDC converter 14, discharge means 15, a pressure application mechanism 16, and a pressure sensor 17. Note that the controller 10 in the present embodiment corresponds to an example of "control means", "remaining discharge capacity estimating means" and "determining means" in the present invention. In addition, the pressure sensor 17 in the present embodiment corresponds to an example of "pressure acquiring means" in the present invention.

The controller 10 is a battery control unit (BCU). The controller 10 includes, for example, a memory such as a ROM or a RAM, and a processor such as a CPU. This controller 10 manages the state of a battery module 2 based on a detected voltage detected by the voltage sensor 11, a detected current detected by the current sensor 12, a detected temperature detected by the temperature sensor 13, and the like, and determines the SOC usage range of the battery module 2 according to the state of the battery module 2.

In addition, the controller 10 controls the discharge means 15 and the pressure application mechanism 16, as will be described below.

The voltage sensor 11 is a sensor for detecting voltage between terminals of the battery module 2. The voltage sensor 11 is connected between wiring connected to a positive electrode and a negative electrode of the battery module 2. The current sensor 12 is a sensor for detecting input/output current of the battery module 2. The current sensor 12 is connected to the wiring that is connected to the positive electrode or the negative electrode of the battery module 2. The temperature sensor 13 is provided in the battery module 2. The temperature sensor 13 is a sensor for detecting the temperature of the battery module 2.

The DCDC converter 14 is a power conversion device that converts voltage input from the battery module 2 into a predetermined voltage and outputs power to a load such as a motor. The DCDC converter 14 is also a power conversion device that converts voltage input from a load such as a motor or a charging device into a predetermined voltage and outputs electric power to the battery module 2. The DCDC converter 14 is controlled by the controller 10. The battery module 2 is connected to an input side of the DCDC converter 14, and a load is connected to an output side of the DCDC converter 14. The load may be a power grid including a motor inverter or the like. That is, the battery module 2 is connected to the load via the DCDC converter 14.

The discharge means 15 is a circuit for individually discharging a plurality of battery cells 21 included in the battery module 2. The discharge means 15 is electrically connected to the positive electrode and negative electrode of the battery cell 21, and one discharge means 15 is electrically connected to one battery cell 21. This discharge means 15 may be any general discharge means used for balancing, which discharges the battery cell 21 having a larger remaining discharge capacity than the remaining discharge capacity of the other battery cells 21. In the present embodiment, as the balancing, passive balancing is executed in which discharging is performed so that the remaining discharge capacity of the other battery cells 21 matches the remaining discharge capacity of the battery cell 21 having the smallest remaining discharge capacity. However, active balancing may be executed as the balancing.

The discharge means 15 in the present embodiment is not particularly limited; however, for example, includes at least a resistor and a switch electrically connected in series to the resistor. The switch is controlled to be turned ON and OFF by the controller 10, and when the controller 10 turns the switch ON, the battery cells 21 discharge.

The pressure application mechanism 16 applies pressure to the battery module 2 by pressing the battery module 2 along a stacking direction of the battery cells 21 in the battery module 2. The pressure application mechanism 16 in the present embodiment includes a motor driver circuit 161, a motor 162, a gear box 163, a pressure transmission body 164, a fixed end plate 165, a movable end plate 166, and a plurality of shafts 167. The movable end plate 166 in the present embodiment corresponds to an example of "pressure application means" in the present invention.

The motor driver circuit 161 operates the motor 162. The motor driver circuit 161 controls driving of the operation of the motor 162 based on a control signal from the controller 10.

The motor 162 has a first drive shaft 162a. The motor 162 drives and rotates the first drive shaft 162a in response to an output from the motor driver circuit 161.

The gear box 163 is connected to the first drive shaft 162a, and converts the rotational drive of the first drive shaft 162a into the drive of the pressure transmission body 164 in the above-described stacking direction.

The pressure transmission body 164 moves up and down by a driving force transmitted via the gear box 163. The pressure transmission body 164 includes a second drive shaft 164a and a pressure transmission plate 164b. The second drive shaft 164a is connected to a gear box 163, and the rotational drive of the first drive shaft 162a of the motor 162 is transmitted by the gear box 163. The pressure transmission plate 164b is a plate that moves along the stacking direction as the second drive shaft 164a rotates, and in the present embodiment, the pressure applied to the battery module 2 can be controlled in an increasing direction by the pressure transmission plate 164b moving downward in the figure, and the pressure applied to the battery module 2 can be controlled in a decreasing direction by the pressure transmission plate 164b moving upward in the figure.

The fixed end plate 165 and the movable end plate 166 are a pair of plate-like members and are connected to each other by the plurality of shafts 167. The fixed end plate 165 is fixed to a shaft 167 and supports the battery module 2. On the other hand, the movable end plate 166 is not fixed to the shaft 167 and is movable along the extension direction of the shaft 167, and applies pressure to the battery module 2 from above in response to a force transmitted from the pressure transmission body 164. In addition, this movable end plate 166 can move along the stacking direction in response to the expansion and contraction of the battery module 2 due to charging and discharging, and the expansion and contraction of the battery module 2 due to changes in the pressure applied to the battery module 2 by the movable end plate 166.

The pressure sensor 17 is a sensor capable of measuring the pressure applied to the battery module 2. The pressure sensor 17 can output the detected pressure to the controller 10.

The battery module 2 is electrically connected to a charging device. The charging device connected to the battery cell 21 is, for example, a device for charging the battery module 2 mounted in an electric vehicle or in a hybrid vehicle. Charging of the battery module 2 mounted in the vehicle is performed by removing a charging cable from the charging device, attaching a charging gun at a tip end of the charging cable to a connector of a charging port of the vehicle, and then operating a charging start switch. The controller 10 manages the state of charge (SOC) of the battery cells 21 included in the battery module 2, and controls the DCDC converter 14 and the charging device so that the state of charge of the battery module 2 becomes a target state of charge.

As described above, the battery module 2 is electrically connected to a load such as a motor. The load is a device that operates using the power of the battery module 2, and is, for example, a motor that serves as a drive source for the vehicle, or an auxiliary device such as an air conditioner and lights. The discharge of the battery module 2 is executed under the control of the controller 10 in response to a system request or an external power request. The system request corresponds to a command from an on-board computer such as an ECU while the vehicle is running. Regarding an external power request, for example, in a case in which an air conditioner is operated by a timer setting in response to a command from an external device such as a mobile terminal before the vehicle starts to travel so that the interior temperature of the vehicle cabin is an appropriate temperature when the vehicle starts to travel, the command from the external device corresponds to an external power request.

In addition, the battery module 2 mounted in an electric vehicle or a hybrid vehicle may be used for Vehicle Grid Integration (VGI). VGI is a technology in which an electric vehicle or a hybrid vehicle in which a battery module 2 is mounted is connected to a system line, and the power stored in the battery module 2 is supplied to the system line (load) via the power grid.

The battery cells 21 included in the battery module 2 have at least a positive electrode, a solid electrolyte, and a negative electrode. The positive electrode contains at least a positive electrode active material capable of releasing and absorbing an alkali metal such as lithium (Li), sodium (Na), or potassium (K), and although not particularly limited, preferably contains a positive electrode active material including sulfur. As the solid electrolyte, for example, a sulfide solid electrolyte, an oxide solid electrolyte, or the like can be used; however, it is preferable to use a sulfide solid electrolyte. The negative electrode may be made of any material that includes lithium, and preferably includes lithium metal, for example.

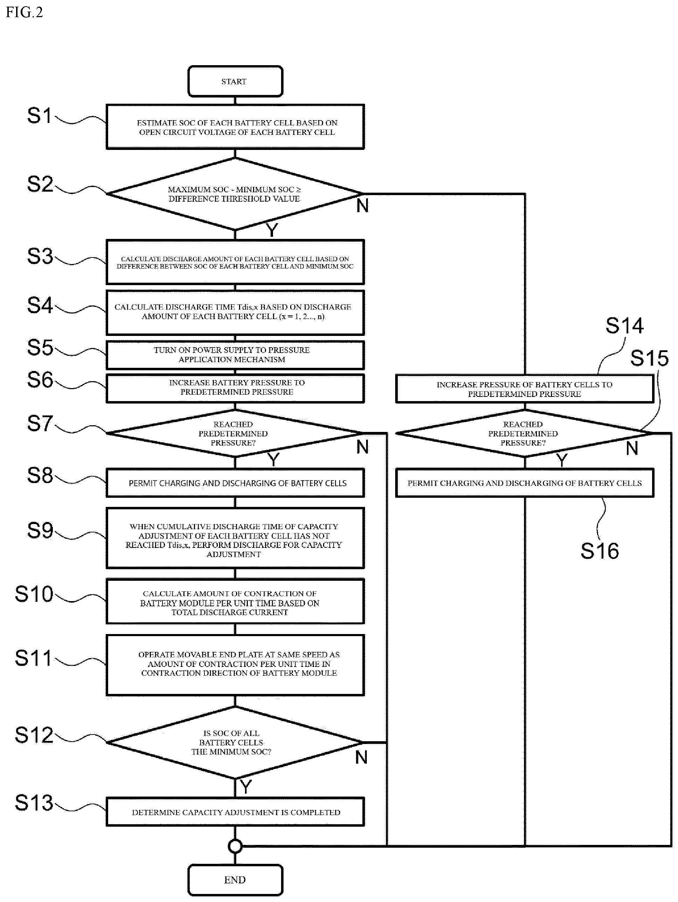

A battery control method for the battery module 2 using the battery control system 1 will be described below. FIG. 2 is a flowchart showing a procedure of a battery control method according to the present embodiment. The battery control method of the present embodiment is repeatedly executed at predetermined intervals, particularly at the start or the like of the vehicle when balancing of the battery cells 21 is executed.

First, in step S1, the controller 10 estimates the SOC of each battery cell 21 based on an open circuit voltage of each battery cell 21. The SOC can be estimated by a general method that uses the open circuit voltage of each battery cell 21 or an integrated value of the charging and discharging charge.

In step S2, the controller 10 calculates the difference between the maximum value (highest SOC) and the minimum value (lowest SOC) of the SOC of each battery cell 21. The calculated difference is then compared with a predetermined difference threshold value.

In a case in which the difference calculated in step S2 is equal to or greater than the difference threshold value, balancing (capacity adjustment) needs to be executed, and thus, in step S3, the discharge amount during balancing for each battery cell 21 is calculated from a difference between the SOC of each battery cell 21 and the minimum SOC so that the remaining discharge capacity of each battery cell 21 can be approximately equal. For example, in a case in which a battery has a capacity of Qₘₐₓ [Ah] at 100% SOC, and the remaining discharge capacity of the battery cell 21 with the lowest SOC is Qₘᵢₙ [Ah], when the remaining capacity of a particular battery cell 21 included in the battery module 2 is Q1 [Ah], then the discharge amount of that battery cell 21 during balancing will be Q₁-Qₘᵢₙ [Ah].

In step S4, a discharge time T_{dis,x} (x=1, 2, . . . , n) (n is the number of battery cells 21) of each battery cell is calculated from the calculated discharge amount. The discharge time T_{dis,x} can be calculated for each battery cell 21; for example, in a case in which the discharge amount of a specific battery cell 21 is Q₁-Qₘᵢₙ [Ah], the discharge time is (Q₁-Qₘᵢₙ) x R = V [h] using the resistance value R [Ω] of the resistor of the discharge means 15 connected to each battery cell 21 and the current battery voltage V [V].

In step S5, the controller 10 turns ON the power supply of the pressure application mechanism 16. That is, in the present embodiment, the controller 10 outputs an ON signal to the motor driver circuit 161. The pressurization control of the battery module by the pressure application mechanism 16 executed during steps S5 to S13 corresponds to an example of a "first pressurization control" of the present invention.

In step S6, the controller 10 increases the pressure applied to the battery module 2 to a predetermined pressure. That is, before balancing starts, the controller 10 moves the movable end plate 166 downward (in the contraction direction of the battery module 2) to increase the pressure applied to the battery module 2. As a result, the electrical resistance of the battery cell 21 decreases.

In step S7, the controller 10 determines, based on a detected value of the pressure sensor 17, whether or not the pressure applied to the battery module 2 has reached a predetermined pressure. The predetermined pressure in the present embodiment is a performance requirement pressure P₁. Note that the pressure applied to the battery cells 21 is approximately equal to the pressure applied to the battery module 2.

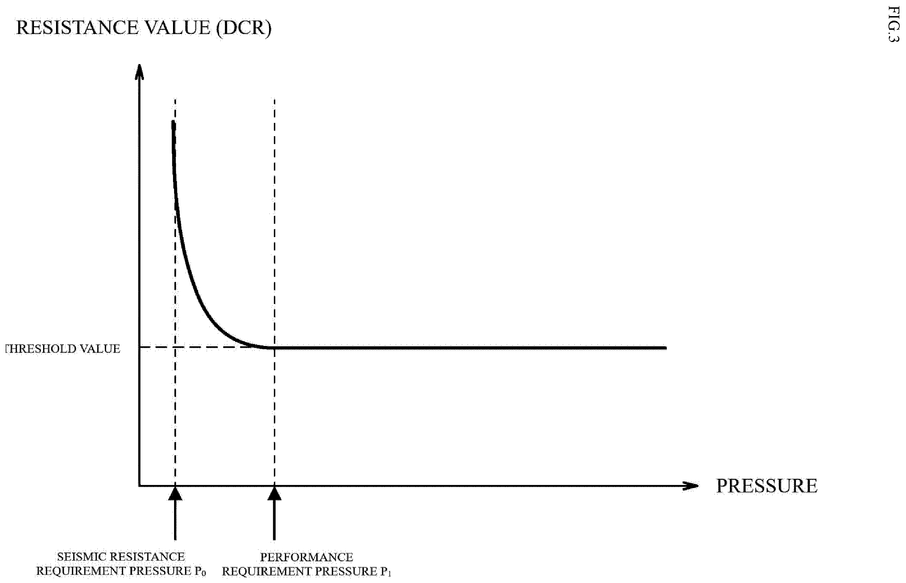

FIG. 3 is a graph showing a relationship between pressure applied to the battery cell 21 and a resistance value of the battery cell 21. As shown in FIG. 3, the greater the pressure applied to the battery module 2, the more the resistance value of the battery cell 21 decreases. Here, the performance requirement pressure P₁ is the pressure at which the electrical resistance of the battery cell 21 becomes equal to a predetermined threshold value, and this threshold value is the maximum value of electrical resistance within the range of electrical resistance at which the battery cell 21 can input and output the charging and discharging power required to operate the control system of the vehicle.

The performance requirement pressure P₁ can be experimentally obtained as follows. The greater the resistance of a battery cell, the less power the battery cell can charge and discharge, and thus pressure is applied to the battery cell to reduce the resistance of the battery cell, at least until the battery cell can output the power required to operate the control system of the vehicle (including the balancing system). In this case, the minimum pressure at which the power required to operate the control system can be output can be experimentally found based on the relationship between pressure and power, thereby making it possible to determine the performance requirement pressure P₁.

Moreover, this performance requirement pressure P₁ is greater than a seismic resistance requirement pressure P₀. The seismic resistance requirement pressure P₀ is the minimum pressure at which the battery module 2 will not fall out from between the fixed end plate 165 and the movable end plate 166 even when an external force such as an impact or vibration is applied to the battery module 2.

Note that the predetermined pressure may be a pressure greater than the performance requirement pressure P₁, or may be a pressure slightly lower than the performance requirement pressure P₁, provided that the predetermined pressure is small to the extent that it does not adversely affect the balancing accuracy.

In addition, in the present embodiment, pressure applied to the battery module 2 (pressure applied to the battery cells 21) is detected by the pressure sensor 17, which is not limited to this. The pressure may be estimated without the use of the pressure sensor 17.

More specifically, for example, in a case in which the negative electrode is a Li metal negative electrode, the thickness of the battery cell changes approximately in proportion to the SOC. Therefore, the thickness of the battery module changes approximately in proportion to the charging and discharging amount of the battery module. Furthermore, the amount of change in thickness of the battery module caused by operating the motor is determined by the gear ratio, screw pitch, and the like within the pressure application mechanism, and the amount of operation of the motor. Therefore, in a case in which the relationship between the difference between the amount of change in thickness of the battery module due to charging and discharging amounts and the amount of change in thickness of the battery module due to motor operation and the pressure is experimentally obtained, the pressure can be estimated from time-series changes in the motor command value and SOC based on this relationship.

Returning to FIG. 2, in a case in which it is determined that the pressure applied to the battery module 2 has reached the predetermined pressure, then in step S8, the controller 10 permits charging and discharging of each battery cell 21 of the battery module 2 through balancing. That is, the controller 10, by using the discharging means 15, causes the discharging means 15 to discharge each battery cell 21 for balancing. At this time, the first pressurization control has not yet been completed, and the pressurization operation on the battery module 2 is still continuing. That is, in the present embodiment, the discharge means 15 starts balancing based on an instruction from the controller 10 before the first pressurization control is completed. The discharge of the battery cells 21 by the discharge means 15 executed in steps S8 to S13 in the present embodiment corresponds to an example of "balancing" in the present invention.

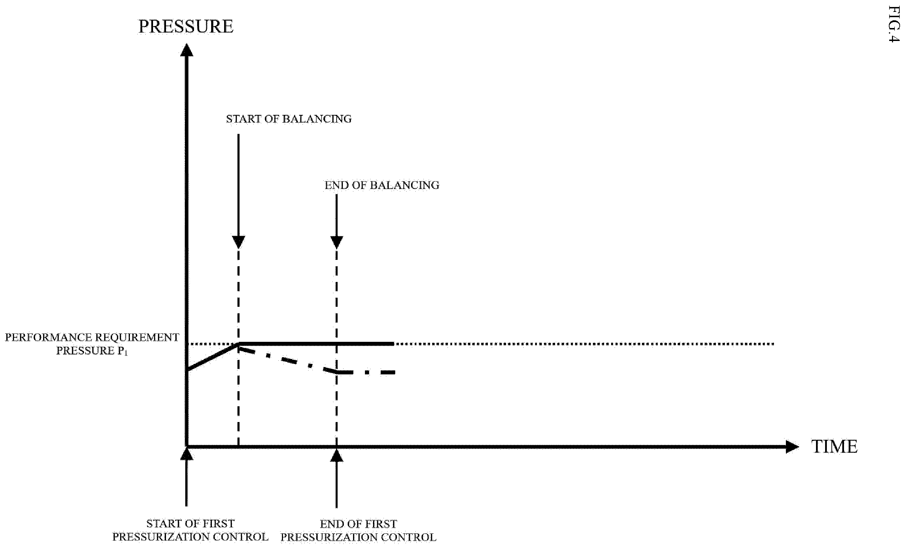

FIG. 4 is a graph showing the change in pressure over time in the battery control method of the present embodiment. Note that the solid line in the graph indicates change in pressure over time. As shown in FIG. 4, after the first pressurization control is started, the pressure applied to the battery module 2 is gradually increased, and when the pressure reaches the performance requirement pressure P₁, balancing is started. Note that in FIG. 4, the pressure remains constant after balancing starts; however, this is due to the contraction of the battery module 2 caused by balancing, and as will be described below, pressurization by the first pressurization control actually continues even after balancing starts.

Also, note that, in a case in which it is determined in step S7 that the pressure applied to the battery module 2 has not reached the predetermined pressure, the current battery control is terminated, and after a predetermined period, the battery control is restarted from step S1.

Returning to FIG. 2, in step S9, when the cumulative discharge time due to balancing of each battery cell 21 has not reached T_{dis,x}, the controller 10 continues discharging until the cumulative discharge time due to balancing of each battery cell 21 reaches T_{dis,x}.

In step S10, the controller 10 calculates the amount of contraction (amount of reduction in thickness) of the battery module 2 per unit time based on the total value of the discharge current of each battery cell 21 calculated in step S3. The amount of contraction of the battery module 2 per unit time can be obtained experimentally. For example, the amount of discharge current of one battery cell 21 and the amount of reduction in thickness of one battery cell 21 per unit time relative to that amount of discharge current are measured in advance, and the relationship between the amount of discharge current and the amount of reduction in thickness of one battery cell 21 per unit time is determined. Then, the controller 10 calculates the amount of reduction in thickness per unit time of each battery cell 21 included in the battery module 2 based on the amount of discharge current of each battery cell 21, and calculates the total amount of reduction in thickness per unit time of each battery cell 21. This total value is the amount of contraction of the battery module 2 per unit time.

In step S11, the controller 10 moves the movable end plate 166 of the pressure application mechanism 16 in the contraction direction of the battery module 2 (downward in FIG. 1) at a speed equal to the amount of reduction in battery thickness per unit time. As a result, as shown in FIG. 4, the pressure applied from the movable end plate 166 to the battery module 2 during balancing is kept substantially constant and does not fall significantly below the performance requirement pressure P₁. Note that the amount of movement of the movable end plate 166 may be larger than the amount of contraction of the battery module 2, and in such a case, the pressure applied to the battery module 2 will be larger than the performance requirement pressure P₁.

In step S12, the controller 10 determines whether or not the cumulative discharge time due to balancing of all the battery cells 21 has reached T_{dis,x} and whether the SOC of all the battery cells 21 has become a value equal to the above-mentioned minimum SOC.

In a case in which the controller 10 determines in step S12 that the SOC of all the battery cells 21 has become a value equal to the above-mentioned minimum SOC, then in step S13, the controller 10 determines that balancing of all the battery cells 21 has been completed.

Note that in a case in which it is determined in step S12 that balancing of all the battery cells 21 has not been completed, the current battery control is ended, and after a predetermined period, the battery control is restarted from step S1.

In a case in which the controller 10 determines in step S2 that the calculated difference is less than the difference threshold value, the controller 10 increases the pressure of the battery cells 21 to a predetermined pressure (performance requirement pressure P₁) in step S14. The pressurization control executed in step S14 corresponds to an example of a "second pressurization control" in the present invention.

In step S15, the controller 10 determines, based on a detected value of the pressure sensor 17, whether or not the pressure applied to the battery module 2 has reached the predetermined pressure.

In step S15, in a case in which the controller 10 determines that the pressure applied to the battery module 2 has reached the predetermined pressure, the controller 10 permits charging and discharging of the battery cells 21. In this case, balancing of the battery cells 21 is not necessary, and thus charging and discharging of the battery cells 21 refers to charging and discharging of a load such as a drive motor of the vehicle.

In a case in which the controller 10 determines in step S15 that the pressure applied to the battery module 2 has not reached the predetermined pressure, the current battery control is terminated, and the battery control is restarted from step S1 after a predetermined period.

Conventionally, due to the pressure application mechanism, control method, and self-discharge when the vehicle was left stopped for a long period of time, there were cases when it was impossible to apply a pressure suitable for charging and discharging to the battery module when the control system of the vehicle was started. Furthermore, in conventional control systems, the BMS would perform adjustment of the capacities of the battery cells immediately after startup in order to set the battery cells to a state ready for charging and discharging as quickly as possible, and thus, charging and discharging would occur outside the appropriate pressure range, and even when discharging was performed at a predetermined time, the discharge amount would deviate due to resistance losses and not reach the desired discharge amount, which could reduce the accuracy of balancing.

In contrast, in the battery control system and battery control method of the present embodiment, the first pressurization control, in which the pressure applied to the battery module 2 by the movable end plate 166 is increased to the predetermined pressure or higher to reduce the electrical resistance of the battery cells 21, is started before balancing begins, thereby enabling charging and discharging to be performed within an appropriate pressure range. Therefore, the balancing accuracy can be improved.

In addition, in the present embodiment, by setting the predetermined pressure to the performance requirement pressure P₁, the electrical resistance of the battery cells 21 can be made more suitable for balancing, thereby improving the accuracy of balancing.

Moreover, in the present embodiment, the discharge means 15 starts the balancing before the first pressurization control is completed, and thus the time required for the start-up process of the vehicle can be shortened.

Furthermore, in the present embodiment, in a case in which balancing is started before the first pressurization control is completed, the amount of movement of the movable end plate 166 in the first pressurization control is set to be the same as the amount of contraction of the battery module 2 due to balancing, thereby suppressing an increase in the electrical resistance of the battery cell 21 and suppressing an increase in resistance loss during balancing. Thus, not only is it possible to shorten the start-up time, but it is also possible to improve the balancing accuracy.

In addition, in the present embodiment, even in a case in which it is determined that balancing is not necessary, the second pressurization control (see step S14 in FIG. 2) is executed to increase the pressure applied to the battery module 2 to the predetermined pressure or higher, and thus the resistance value of the battery module 2 can be set to an appropriate value before the vehicle control system is operated.

Note that in the above embodiment, the balancing is started before the first pressurization control is completed; however, the present invention is not limited to this, and the balancing may be started after the first pressurization control is completed.

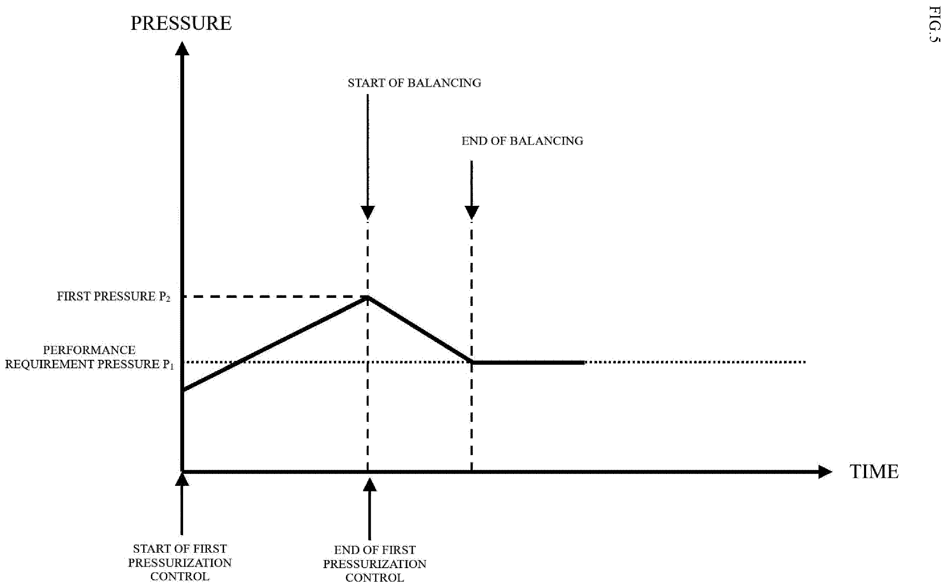

FIG. 5 is a graph showing the change in pressure over time in a battery control method according to a modified example of the present embodiment. As shown in FIG. 5, in this modified example, in steps S6 and S7 of the flowchart in FIG. 2, the pressure applied to the battery module 2 is increased to a first pressure P₂ that is higher than the performance requirement pressure P₁.

The first pressure P₂ is a pressure that takes into consideration the amount of contraction of the battery module 2 that accompanies discharging of the battery cells 21 during balancing. More specifically, the first pressure P₂ is set to be larger as the total value of the remaining discharge capacities of the battery cells 21 is larger. In other words, the first pressure P₂ is set to be larger as the amount of reduction in thickness of the battery module 2 due to balancing increases.

The difference P₂-P₁ between the first pressure P₂ and the performance requirement pressure P₁ corresponds to pressure that is further applied in accordance with the amount of contraction of the battery module 2. As for this difference P₂-P₁, the amount of contraction (amount of reduction in thickness) of the battery module 2 due to balancing is calculated based on the total value of the discharge current of the battery cells 21 calculated in step S3. The relationship between the amount of contraction and the amount of reduction in pressure applied to the battery module 2 can be experimentally calculated in advance, and the calculated amount of reduction in pressure is set as the difference P₂-P₁.

By starting balancing after the pressure has reached the first pressure P₂ set in this manner, it is possible to prevent the pressure from falling below the performance requirement pressure P₁ during balancing, as shown in FIG. 5. Therefore, with the battery control system and battery control method of this modified example, even in a case in which the discharge amount due to balancing varies, it is possible to suppress a decrease in pressure and an increase in battery resistance. Furthermore, even though the pressure drops due to balancing, it is possible to prevent the pressure from dropping to an extent that the resistance loss becomes unacceptable.

### Description of Reference Numerals

1 Battery control system
10 Controller
11 Voltage sensor
12 Current sensor
13 Temperature sensor
14 DCDC converter
15 Discharge means
16 Pressure application mechanism
161 Motor driver circuit
162 Motor
162a First drive shaft
163 Gear box
164 Pressure transmission body
164a Second drive shaft
164b Pressure transmission plate
165 Fixed end plate
166 Movable end plate
167 Shaft
17 Pressure sensor
2 Battery module

## Claims

1. A battery control system for controlling a battery module in which a plurality of battery cells each having a solid electrolyte and a negative electrode containing lithium are stacked; the battery control system comprising:
pressure application means configured to apply pressure to the battery module by pressing the battery module along a stacking direction of the battery cells;
control means configured to adjust a value of the pressure by controlling the pressure application means;
remaining discharge capacity calculation means configured to calculate a remaining discharge capacity of each of the battery cells; and
discharge means configured to discharge the battery cells to balance the remaining discharge capacities among the battery cells; wherein
the control means starts a first pressurization control for increasing the pressure by the pressure application means to a predetermined pressure or higher before the balancing is started.

2. The battery control system according to claim 1, wherein
the predetermined pressure is a performance requirement pressure;
the performance requirement pressure is a pressure at which an electrical resistance of the battery cell becomes equal to a threshold value; and
the threshold value is a maximum value of the electrical resistance within a range of the electrical resistance of the battery cell that allows the battery cell to input and output charge/discharge power required to operate a control system of a vehicle.

3. The battery control system according to claim 2, wherein
the control means increases the pressure to a first pressure higher than the performance requirement pressure in the first pressurization control; and
the first pressure is set to be larger as a total value of the remaining discharge capacity increases.

4. The battery control system according to claim 3, wherein
the control means sets the first pressure to a larger value as the amount of reduction in thickness of the battery module due to the balancing increases.

5. The battery control system according to claim 2, wherein
the discharge means starts the balancing before the first pressurization control is completed.

6. The battery control system according to claim 5, wherein
the battery module contracts in a contraction direction along the stacking direction as the battery cells are discharged due to the balancing;
the pressure application means moves along the contraction direction in the first pressurization control; and
an amount of movement of the pressure application means in the first pressurization control is equal to or greater than an amount of contraction of the battery module due to the balancing.

7. The battery control system according to claim 1, wherein
the battery control system further comprises determining means configured to determine whether or not the balancing is required; and
in a case where the balancing is determined not to be necessary, the control means completes a second pressurization control for increasing the pressure to a predetermined pressure or higher to reduce the electrical resistance of the battery cells before the battery module starts charging and discharging for operating the control system of the vehicle.

8. A battery control method for controlling a battery module in which a plurality of battery cells each having a solid electrolyte and a negative electrode containing lithium are stacked; the battery control method, comprising:
calculating the remaining discharge capacity of each of the battery cells;
executing balancing of the remaining discharge capacities among the battery cells by discharging the battery cells; and
increasing pressure applied to the battery module to a predetermined pressure or higher by pressing the battery module along the stacking direction of the battery cells by pressure application means before the balancing is started.
